# EUROPEAN PATENT SPECIFICATION

(11) **EP 0 970 441 B1**
(45) Date of publication and mention of the grant of the patent: **15.06.2005**
(21) Application number: 98913932.4
(22) Date of filing: 27.03.1998
(51) Int. Cl.: G06T 15/00, G06T 15/10

(54) **IMPROVEMENTS IN ARTIFICIAL IMAGE GENERATION**
VERBESSERUNG AN KÜNSTLICHER BILDERZEUGUNG
AMELIORATIONS CONCERNANT LA GENERATION D'IMAGES ARTIFICIELLES

(30) Priority: 27.03.1997 GB 9706375
(43) Date of publication of application: 12.01.2000
(73) Proprietor: BRITISH BROADCASTING CORPORATION, London W1A 1AA (GB)
(72) Inventor: THOMAS, Graham, Alexander, Uckfield, East Sussex TN22 3HA (GB); RUSSELL, Richard, Thomas, Orsett, Essex RM16 3DF (GB)
(74) Representative: Garratt, Peter Douglas
(86) International application number: PCT/GB1998/000938
(87) International publication number: WO 1998/044456

(56) References cited:
- WO-A-96/14621
- US-A- 5 570 433

## Description

This invention relates to the field of artificial image generation.

There are many methods that can be used to generate artificial images ranging from simply "cutting and pasting" parts of photographs, to computer-based generation of views of 3D models. Most methods currently in use tend to generate images as if they were viewed by a simple "pin-hole lens" camera with an infinite depth of field (the range of camera-object distances over which the image is sharp), so that all objects appear to be perfectly in focus. This can make the images look unrealistic.

To improve the realism of such synthetic images, it is desirable to simulate the defocusing effects which occur with a real camera. Objects which are closer to, or further away from, the camera than the distance on which the camera is focused will be out-of-focus (blurred) to a degree dependent on the distance of the object and the aperture (iris) of the camera. When the aperture of the camera is small, the depth-of-field will be large and when the aperture is large, the depth-of-field will be small.

Assuming a perfect camera lens, with a circular aperture and neglecting diffraction effects, each point in an object is defocused to become a disc in the image plane. This disc, otherwise known as the "circle of confusion", has a size which depends on the distance of the object from the lens and on the lens aperture: if the object is "in focus" the disc is reduced to a point. The final image is the superposition of all the "discs" resulting from every point in the scene (taking into account the effect of foreground objects obscuring background objects).

In situations where all points in the image require the same degree of defocusing, this can be achieved relatively easily, by convolving the image with an appropriate filter. For example, some DVEs (digital video effects devices) can implement this in real-time for broadcast-standard video signals. The point-spread function (ie. the filter kernel) should generally be circular (corresponding to the "circle of confusion"), although it is common for DVEs to implement a rectangular aperture, since this leads to a more efficient hardware implementation in exchange for less realism.

However, in the general case, the synthetic image will contain objects at a range of depths, each of which should be defocused by a different amount. It is fundamentally impossible to process such an image to correspond to what would be seen by a camera with a finite aperture, because some of the information will have been lost. For example, when a foreground object is out of focus it no longer appears fully opaque at its edges, therefore it does not completely obscure the background. Since some of this background is not present in the original image (it was hidden by the sharply-focused foreground) it can never be regenerated.

One approach to this problem, applicable in situations where the synthetic image is calculated by a computer to correspond to a view of a 3D model, is to simulate the effect of depth of field during the rendering process rather than as a separate process applied after the image has been rendered. This can be done by computing a number of views of the scene from different points within the aperture of the camera being modelled, and averaging the resulting images. This simulates directly the effect of the finite camera aperture, and allows a very realistic image to be generated if a large number of closely-spaced viewpoints are used. However, this requires a huge amount of additional computation compared to rendering the image from a single viewpoint. The net effect of this is generally to lower the overall quality of the image that can be rendered for a given amount of processing capacity. This can end up reducing, rather than enhancing, the realism of the final image.

An alternative method is to filter the original sharp image under the control of a depth signal, which indicates the distance from the camera of the object at each point in the image. This signal can be used to control the size of the filter kernel with which the image is convolved. This idea was proposed in a paper entitled "Synthetic image generation with a lens and aperture camera model", by M. Potmesil and I. Chakravarty, ACM Transactions of Graphics, Vol. 1 No. 2, April 1982, pp. 85-108. This proposed the use of a circular point-spread function, dependant on the distance of the image point from the camera, and the focus setting and depth-of-field of the camera. The paper also proposed that each pixel in the input image should distribute its intensity to pixels in the output image in accordance with the point-spread function appropriate for the depth of that pixel. Thus objects that are at a depth corresponding to the camera focus setting undergo no blurring, whereas those at other distances are blurred by the amount appropriate for that distance. However, at boundaries between objects at different depths, this process does not give subjectively pleasing results.

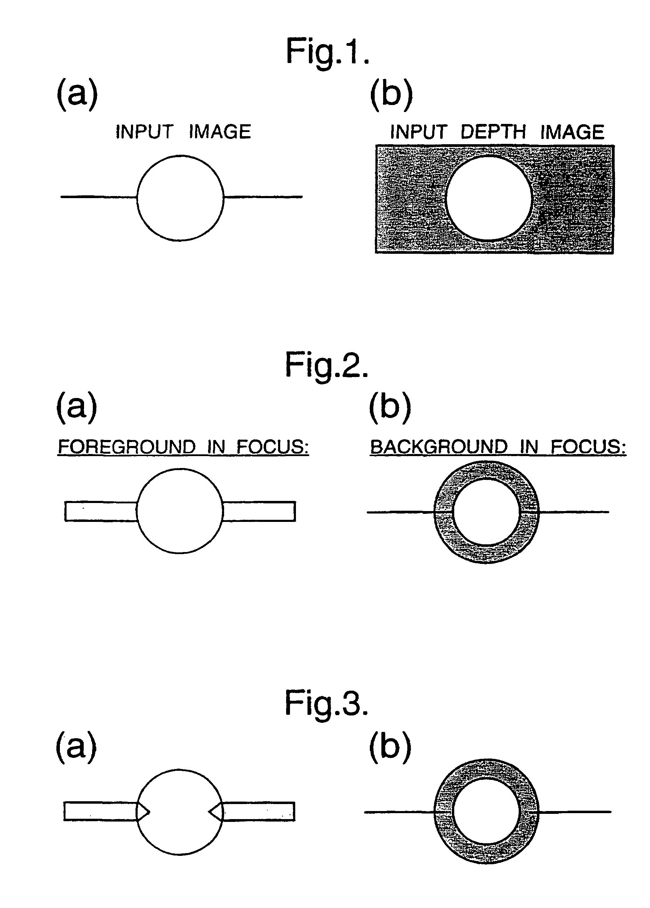

For example, consider the situation shown in Fig. 1. The figure shows a white circle with a black line around its edge (such as a white saucer with a black lip), in front of a white background with a black horizontal line drawn on it. The input image, showing both foreground and background sharp, is shown in (a). The depth map is shown in (b), with the darker shade indicating the area which is further away. If the foreground circle is in focus and the background is out of focus, the ideal output image is shown in Fig. 2(a), with the light shaded area showing the blurring of the horizontal line. The ideal image with the background in focus is shown in Fig 2(b), with the dark shaded area showing the blurring of the ring. If the image is processed with the prior art method described earlier, the image in Fig. 3(a) will be produced with the foreground in focus, and Fig. 3(b) with the background in focus. The line in the background in Fig. 3(a) is incorrectly spread out into the area of the circle, since each point in the input image (including those immediately adjacent to the edge of the circle) is spread according to its distance from the camera. Subjectively this is very annoying. The behaviour in Fig. 3(b) is less objectionable however, with the only defect being that the sharp line in the background is only visible through half of the width of the blurring, rather than the whole width as in the ideal case shown in Fig. 2(b).

This prior art method has a further drawback: it is difficult to implement in real-time hardware. This is because it is "input-driven"; that is, the contribution to the output image of each input sample is computed one input sample at a time. It is necessary to use a randomly-accessible image store to build up the processed image, and since each input sample may contribute to many tens (or even hundreds) of output samples, the store would need to have an extremely high input/output bandwidth. A more favourable architecture is one which is "output-driven", with each output sample being computed in turn from the input samples in the surrounding region. This architecture can be implemented using a conventional two-dimensional finite-impulse response filter, whose response is switched from sample to sample in accordance with a control signal derived from the depth map and camera depth-of-field information.

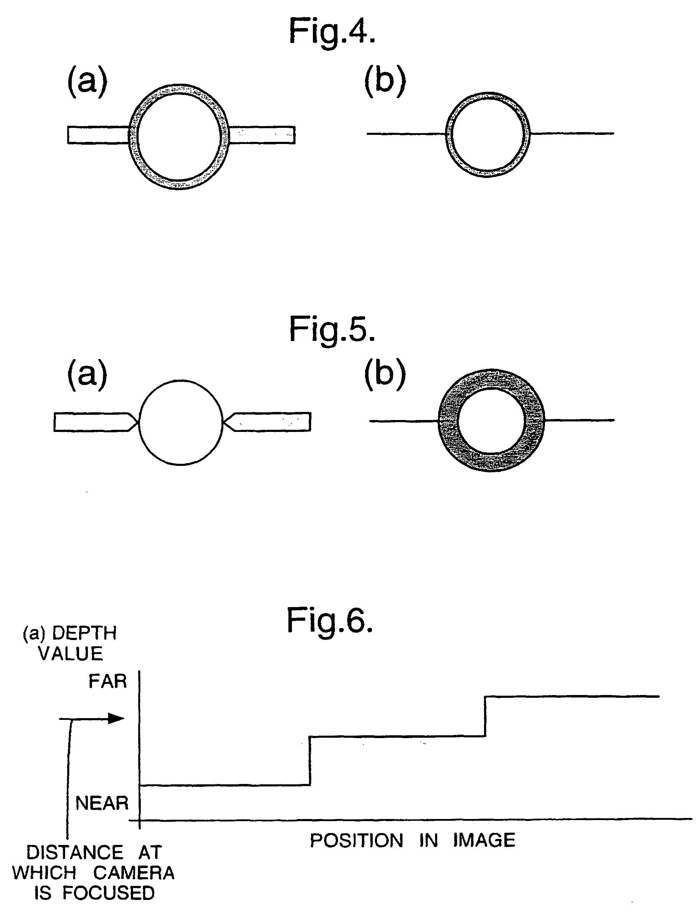

The simplest type of "output-driven" defocusing algorithm would form each output sample by applying a filter to the input image, centred at the output sample position, whose shape was that of the point-spread function for an object at that depth. The behaviour of this algorithm is shown in Fig. 4 (a) and (b). It can be seen that it behaves poorly compared to the "input-driven" algorithm in both cases. In the case of the background being defocused, Fig. 4(a), the outer edge of the foreground object is blurred into the background because the image points in the background are all being derived from a large-aperture filter, which encompasses some of the foreground circle for points near its edge. In the case of the foreground being defocused, Fig. 4(b), the outer edge of the circle appears sharp when it should be blurred, because the samples around the edge are being obtained from a filter that performs no blurring, being controlled by the depth of the background. Both effects are subjectively unacceptable.

This very poor behaviour suggests that an output-driven process is unsuitable for performing defocusing.

US 5 570 433 and WO 96/14621 describe different methods of providing defocusing effects in images.

It is an object of the present invention to provide an improved method of simulating depth of field effects in a synthetic image.

It is a further object of aspects of the present invention to provide a method of simulating depth of field effects in a synthetic image which permits efficient hardware implementation.

Accordingly, the present invention consists in one aspect in a method of simulating depth of field effects in a synthetic image in which pixels are blurred to a spatial extent determined by a depth map for the image by application of a defocusing filter taking information from a plurality of input pixels to generate each output pixel, wherein the spatial extent of blurring of a background pixel adjacent a foreground pixel is modified in accordance with the spatial extent of blurring of the foreground pixel and the distance in the image plane between the background pixel and the foreground pixel.

We have realised that it is important to consider the relative depths of objects in the image before allowing one object to blur on top of another. Specifically, at a boundary between two objects of different depths, it is important to ensure that the object nearest the camera has the over-riding effect on the way the blurring is implemented in its vicinity.

We have also realised that there is a method of modifying the behaviour of the filter in an "output-driven" system to allow this principle to be implemented. The method changes the size of the filter aperture near boundaries in the depth map to ensure that the object nearest the camera has the over-riding effect on the way the blurring is implemented in its vicinity. In the case of a foreground object being in focus, the filter aperture is reduced in regions of the background near the foreground object, so that none of the foreground is within the aperture. This ensures that the edge of the foreground object remains sharp, which is subjectively important. It also has the side-effect of producing a "halo" of sharp background around a foreground object, but this is subjectively preferable to the foreground bleeding into the background. The effect is shown in Fig. 5 (a). In the case of the background being in focus, the filter aperture is increased in regions of the background near the foreground object, so that some foreground is included in the aperture. This has the effect of softening the edge of the blurred foreground object, which is subjectively important. This is shown in Fig. 5 (b).

The invention will now be described by way of example with reference to the accompanying drawings in which:-
Figures 1 to 5 show a stylised input image with its depth map and illustrates the effect of certain methods according to the prior art and to the present invention;
Figure 6 is a diagram showing a one-dimensional depth map for use in illustrating a method according to the present invention;
Figure 7 illustrates a method according to the present invention;
Figure 8 is a block diagram showing apparatus according to the present invention; and
Figures 9 and 10 are diagrams illustrating a modified method according to the present invention.

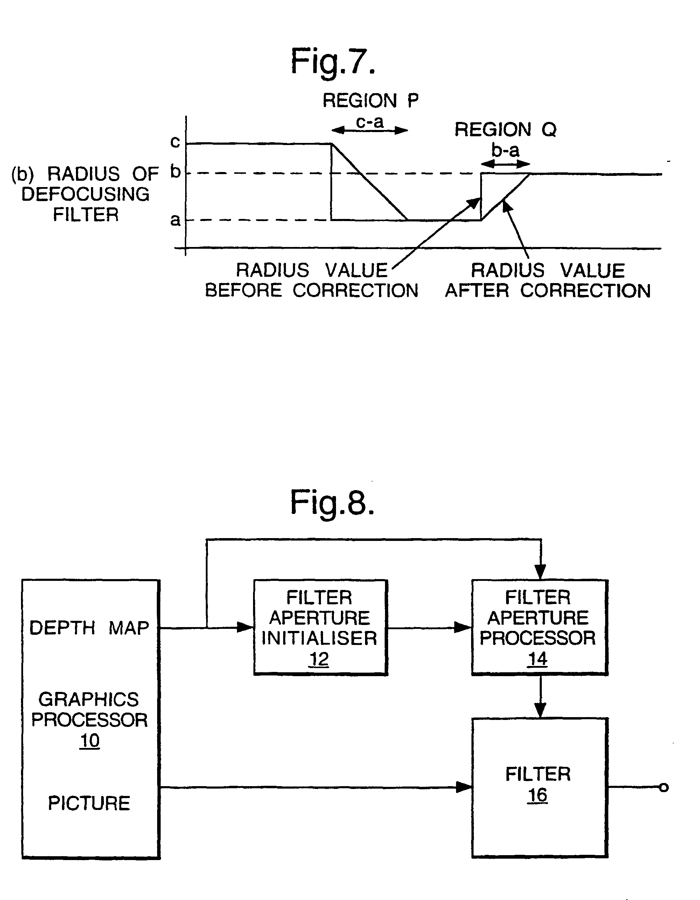

The preferred embodiment of the invention as shown in Fig. 8, takes from a graphics processor 10 a picture, which may be static or moving and from any source, and an associated "depth map" which is a set of values representing the distance from the virtual camera lens of each point in the image (surfaces are assumed to be opaque). The depth map takes the form of a monochrome image where the luminance value is related to the camera-object distance. The information in the depth map, together with the focus and aperture settings of the "virtual" camera, are used to produce a selectively-defocused picture which approximates to that which would have been obtained by a real camera.

The depth map is taken to a filter aperture initializer 12 which provides a filter aperture map to a filter aperture processor 14. This, as will be described, takes both the initial filter aperture map and the depth map to provide a processed aperture map, which is used in filter 16 to operate on the picture to produce an output.

In an area of a picture which is at a constant distance from the camera, so there are no cases of a foreground object partially obscuring a background object, all that is required to simulate the effect of the image being out of focus is to pass the picture through a filter with a uniform circular aperture of a size equal to the circle of confusion for this distance. This size may be determined from the depth map value for this point in the image and the focus and aperture settings of the virtual camera and is applied in initializer 12. There being no changes of depth, the circular aperture is applied in filter 16 with processor 14 having no effect.

However, in an area of the picture near a change of depth, it is necessary to modify the behaviour of the filter, as described previously. This is achieved in processor 14 by performing an exhaustive search of the calculated filter aperture values and depths for all pixels adjacent to the current pixel, both horizontally and vertically, within the maximum aperture of the defocusing filter.

If a pixel is found with a filter aperture whose radius is smaller than that of the filter aperture of the current pixel by a difference more than the effective distance between the pixels, and whose depth value is less than that of the current pixel, the filter aperture for the current pixel is modified to a radius equal to that of the other pixel plus the distance between them.

Similarly, if a pixel is found with a filter aperture whose radius is greater than that of the filter aperture of the current pixel by a difference more than the effective distance between the pixels, and whose depth value is less than that of the current pixel, the filter aperture for the current pixel is modified to a radius equal to that of the other pixel minus the distance between them.

This process can be summarised by the following "pseudo-code" description of the functional blocks in Fig. 8, operating on a depth signal *depth(x,y)* and a value to specify the radius of the defocusing filter at each point, *radius(x,y):*

### Filter aperture initializer

For each pixel *x,y* in the image:

Initialise *radius(x,y)* to the radius of defocusing filter required for an object at *depth(x,y),* according to the camera focus and depth of field values.

### Filter aperture processor

For each pixel position *(x,y)* in the image:

For each point *(x1, y1)* around *(x,y)* within the maximum possible filter aperture:

If *depth(x1,y1) < depth(x,y):*
Compute the distance D between the position (x,y) and (x1,y1);
If *radius(x,y) - radius(x1,y1)* > *D*
then set *radius(x,y) = radius(x1,y1) + D;*
else if *radius(x1,y1) - radius(x,y)* > *D*
then set *radius(x,y) = radius(x1,y1) - D;*
else
leave *radius(x1,y1)* unchanged

### Filter

### Compute output sample at (x,y) by convolving the input image with a filter of radius radius(x,y).

This behaviour is exemplified one-dimensionally in Figs. 6 and 7. The image contains objects at three different depths, shown in the graph of depth value at Fig. 6. The camera is focused close to the middle depth. The initial radius of the defocusing filter, derived in initializer 12 from the depth value at the corresponding position using information on the depth of field and distance at which the camera is focused of the camera, is shown in the thin full line in Fig. 7. This value is then modified in processor 14 according to the method described above, giving the thick full line of Fig. 7. There are three radii a, b and c for the defocusing filter corresponding with the three object depths.

For the pixels in the region labelled P, there are pixels in the adjacent area on the left whose depth value is smaller and whose radius of defocus filter is greater than the distance to these pixels. Therefore the radius of the defocus filter for the pixels in region P is increased. This affects pixels up to a distance of (c-a) from the edge, this being the difference in the radii of the defocus filters in the adjacent areas. This ensures that some blurred foreground extends over the left-hand edge of the object in focus.

For the pixels in region Q, there are pixels in the adjacent area on the left whose depth is smaller and whose radius of defocus filter is smaller than the distance to these pixels. Therefore the radius of the defocus filter for pixels in region Q is decreased. This affects pixels up to a distance of (b-a) from the edge, this being the difference in the radii of the defocus filters in the adjacent areas. This ensures that the right-hand edge of the sharp region never falls into the filter aperture used to defocus the background, keeping this edge sharp.

The above description assumes that the defocusing filter always has a circular aperture. The aperture remains circular as its size is increased or decreased at boundaries in the depth map as explained above. However, to ensure the correct behaviour at depth boundaries, it is only necessary to increase or decrease the part of the filter aperture which falls onto the part of the image with the lower depth value. The approach above modifies the filter aperture by more than is necessary to achieve this, since the aperture is increased or reduced in size all round, rather than just in the area of the image having the lower depth value. This has the advantage of being simpler to implement, since the filter to be applied at each pixel is fully specified by only one number (the radius). The disadvantage is that the degree of filtering is changed by more than is necessary to give the correct behaviour on an edge, resulting a larger change than necessary to the filtering in regions adjacent to edges. Using more complex processing it would be possible to change only parts of the filter aperture, reducing this problem.

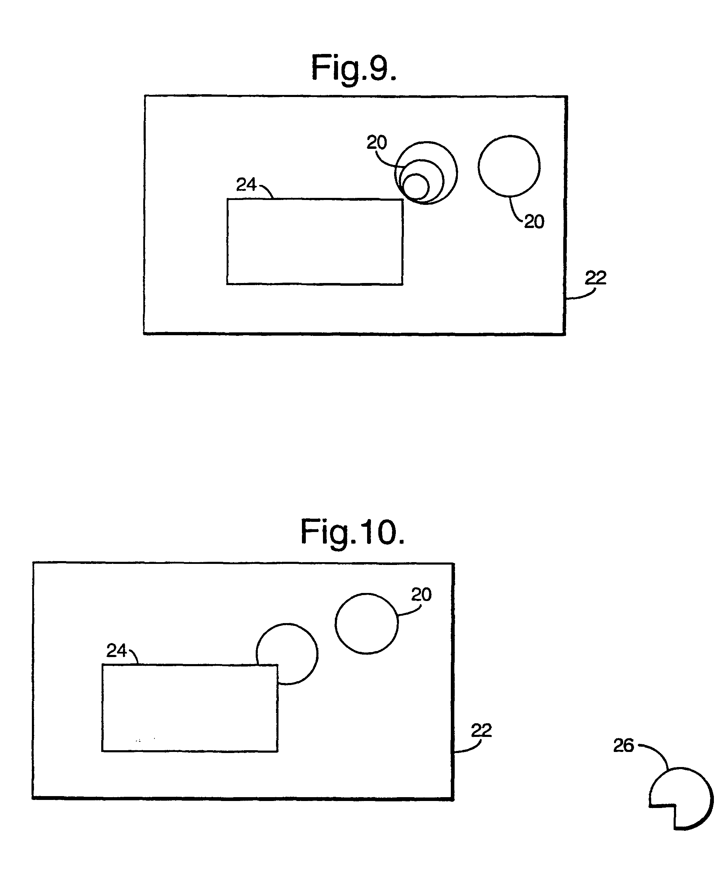

For example, consider the situation shown in Fig. 9. The filter aperture 20 used to blur the background 22 is shown being reduced in radius as the edge of a sharp foreground object 24 is reached, in accordance with the embodiment described above. This has the correct behaviour as far as the foreground object is concerned, but results in a greater reduction in the defocusing applied to the background around the edge than is really necessary. Conversely, in Fig. 10, the aperture of the defocusing filter is only restricted in the area where it would encompass the foreground object. This maintains the correct behaviour on the edge of the foreground object, with minimal reduction in the amount of defocusing applied to the background area around the foreground object. The resulting filter aperture is shown at 26.

Thus this embodiment gives an improvement in the behaviour on edges, in exchange for a more complex system of filter aperture control. To implement this approach, the process explained above would be modified as follows. For each pixel, the coefficients in the filter aperture are initially computed, based on the depth of the pixel without regard to the neighbouring pixels. In the pseudo-code below, these values are stored in the array *aperture (x1,y1),* where x1,y1 are the position of the point in the filter aperture relative to the position of the output pixel being computed. This array is then modified by examining the initial radius value and depth value of surrounding pixels. After testing all pixels within the maximum possible radius of the current pixel, the resulting array of filter coefficients is normalised (divided by the sum of all coefficients) to ensure unity gain. The pixel in the output image is then formed by convolving the input image with the filter coefficients.

### Filter aperture initializer

For each pixel *x,y* in the image:

Initialise *radius(x,y)* to the radius of defocusing filter required for an object at *depth(x,y),* according to the camera focus and depth of field values.

### Filter aperture processor

For each pixel position *(x,y)* in the image:

Initialise *aperture(x1,y1)* to unity in the region around a distance of *radius(x,y)* from the centre, and zero beyond;

For each point *(x1,y1)* around *(x,y)* within the maximum possible filter aperture:

If *depth(x1,y1) < depth(x,y):*
Compute the distance D between the position (x,y) *and (x1,y1),*
If *radius(x,y) - radius(x1,y1)* > *D*
then set *aperture(x1,y1)* = 1;
else if *radius(x1, y1) - radius(x,y)* > *D*
then set *aperture(x1,y1) -* 0;
else
leave *aperture(x1,y1)* unchanged

Normalise the filter aperture coefficients so that they sum to unity;

### Filter

### Compute output sample at (x,y) by convolving the input image with the filter coefficients in aperture.

Clearly, there are embodiments that lie between the two extremes described here. For example, the fitter aperture could be divided into four quadrants, with each quadrant being reduced in size if necessary; then the filter could be fully specified by four values, rather than by one in the simple case, or by one binary value for every potential pixel in the aperture in the complex case.

It will be understood that this invention has been describe by way of examples only and that a wide variety of modifications are possible without departing from the scope of the invention. The apparatus shown in Figure 8 can - as a particular example - take a number of different forms. If it is convenient, the operations of the filter aperture initializer 12 and the filter aperture processor can be performed in software running on the graphics processor 10.

## Claims

1. A method of simulating depth of field effects in a synthetic image in which pixels are blurred to a spatial extent determined by a depth map for the image by application of a defocusing filter taking information from a plurality of input pixels to generate each output pixel, wherein the spatial extent of blurring of a background pixel adjacent a foreground pixel is modified in accordance with the spatial extent of blurring of the foreground pixel and the distance in the image plane between the background pixel and the foreground pixel.

2. A method according to Claim 1, wherein a defocusing filter is employed having a circular aperture.

3. A method according to Claim 1 or Claim 2, wherein the spatial extent of blurring is modified through control of the aperture size of the defocusing filter.

4. A method according to any one of Claims 1 to 3, wherein the spatial extent of blurring is modified through control of the aperture shape of the defocusing filter.

5. A method according to any of the preceding claims, wherein the spatial extent to which a pixel is blurred is defined at least partially by the radius of a filter aperture associated with the defocusing filter for that pixel, comprising: calculating a filter aperture radius for each of the background and foreground pixels; and modifying the spatial extent of blurring of the background pixel in accordance with the calculated radii.

6. A method according to Claim 5, comprising comparing the difference between the calculated filter aperture radii with the distance in the image plane between the background and foreground pixels; and modifying the spatial extent of blurring of the background pixel in dependence on the outcome of the comparison.

7. Apparatus for simulating depth of field effects in a synthetic image by blurring pixels to a spatial extent determined by a depth map for the image, comprising a spatial filter for operating on a picture signal to blur pixels in accordance with a filter aperture map which provides a filter aperture at each pixel and filter aperture map processing means serving to derive from said depth map a filter aperture map in which the filter aperture at a background pixel adjacent a foreground pixel is modified in accordance with the filter aperture at that foreground pixel and the distance in the image plane between the background pixel and the foreground pixel.

8. Apparatus according to Claim 7, wherein each filter aperture is circular.

9. Apparatus according to Claim 7 or Claim 8, wherein filter apertures are modified in size.

10. Apparatus according to Claim 7 or Claim 8, wherein filter apertures are modified in shape.

11. Apparatus according to any of Claims 7 to 10, wherein the filter aperture map comprises a filter aperture radius for each pixel, and wherein the filter aperture map processing means is adapted to compare the difference between the filter aperture radii associated with the background and foreground pixels with the distance in the image plane between the background and foreground pixels and to modify the filter aperture at the background pixel in dependence on the outcome of the comparison.

## Patentansprüche

1. Verfahren, um Tiefenschärfe-Effekte in einem künstlichen Bild zu simulieren, in dem Pixel in einem räumlichen Ausmaß verschwommen sind, das durch eine Tiefenabbildung für das Bild durch Einsatz eines defokussierenden Filters bestimmt wird, welcher Informationen von einer Vielzahl von Eingangs-Pixeln aufnimmt, um jeden Ausgangs-Pixel zu erzeugen, wobei das räumliche Ausmaß des Verschwimmens bzw. Verwackelns eines Hintergrund-Pixels, das an ein Vordergrund-Pixel angrenzt, gemäß dem räumlichen Ausmaß des Verschwimmens bzw. Verwackelns des Vordergrund-Pixels und der Entfernung in der Bildebene zwischen dem Hintergrund-Pixel und dem Vordergrund-Pixel abgeändert wird.

2. Verfahren, nach Anspruch 1, bei welchem ein defokussierender Filter verwendet wird, welcher eine kreisförmige Apertur aufweist.

3. Verfahren, nach Anspruch 1 oder Anspruch 2, bei welchem das räumliche Ausmaß des Verschwimmens bzw. Verwackelns durch Steuerung der Größe der Apertur des defokussierenden Filters abgeändert wird.

4. Verfahren, nach irgendeinem der Ansprüche 1 bis 3, bei welchem das räumliche Ausmaß des Verschwimmens bzw. Verwackelns durch Steuerung der Form der Apertur des defokussierenden Filters abgeändert wird.

5. Verfahren, nach irgendeinem der vorangegangenen Ansprüche, bei welchem das räumliche Ausmaß in welchem ein Pixel verschwimmt, wenigstens teilweise durch den Radius einer Apertur des Filters festgelegt wird, der zu dem defokussierenden Filter für dieses Pixel gehört, welches aufweist: ein Radius der Filter-Apertur wird für jeden der Hintergrund- und Vordergrund-Pixel berechnet; und das räumliche Ausmaßes des Verschwimmens bzw. Verwackelns des Hintergrund-Pixels wird gemäß der berechneten Radien modifiziert.

6. Verfahren, nach Anspruch 5, welches aufweist: ein Vergleichen des Unterschiedes zwischen den berechneten Radien der Filter-Apertur mit dem Abstand in der Bildebene zwischen den Hintergrund- und Vordergrund-Pixeln; und ein Abändern des räumlichen Ausmaßes des Verschwimmens bzw. Verwackelns der Hintergrund-Pixel in Abhängigkeit des Ergebnisses des Vergleichs.

7. Gerät, um Tiefenschärfe-Effekte in einem künstlichen Bild durch Verschwimmen bzw. Verwackeln von Pixeln bzw. Bildelementen in einem räumlichen Ausmaß zu simulieren, das durch eine Tiefenabbildung für das Bild bestimmt wird, das einen räumlichen Filter zur Ausübung einer Wirkung auf ein Bildsignal aufweist, um Pixel bzw. Bildelemente gemäß einer Filter-Aperturabbildung verschwimmen zu lassen, die eine Filter-Apertur zu bzw. bei jedem Pixel bereitstellt, und Filter-Aperturabbildungs-Verarbeitung aufweist, die dazu dienen, um von der Tiefenabbildung eine Filter-Aperturabbildung abzuleiten, bei der die Filter-Apertur bei einem Hintergrund-Pixel, welches an ein Vordergrund-Pixel angrenzt, gemäß der Filter-Apertur bei jenem Vordergrund-Pixel und der Entfernung in der Bildebene zwischen dem Hintergrund-Pixel und dem Vordergrund-Pixel, geändert wird.

8. Gerät entsprechend Anspruch 7, bei dem jede Filter-Apertur kreisförmig ist.

9. Gerät entsprechend Anspruch 7 oder Anspruch 8, bei dem die Größe der Filter-Aperturen verändert wird.

10. Gerät entsprechend Anspruch 7 oder Anspruch 8, bei dem die Form der Filter-Aperturen verändert wird.

11. Gerät, entsprechend irgendeiner der Ansprüche 7 bis 10, bei dem die Filter-Aperturabbildung einen Filter-Aperturradius für jeden Pixel aufweist und bei welchem das Filter-Aperturabbildungs-Verarbeitungsmittel angepasst wird, um den Unterschied zwischen den Filter-Aperturradien, die den Vordergrund- und Hintergrund-Pixeln zugeordnet sind, mit dem Abstand in der Bildebene zwischen den Hintergrund- und Vordergrund-Pixeln zu vergleichen und um die Filter-Apertur bei dem Hintergrund-Pixel in Abhängigkeit des Ergebnisses des Vergleichs anzupassen.

## Revendications

1. Procédé de simulation d'effets de profondeur de champ dans une image artificielle, dans lequel des pixels sont floués sur une étendue spatiale déterminée par une carte de profondeur pour l'image via l'application d'un filtre de défocalisation prenant ses informations à partir d'une pluralité de pixels d'entrée pour générer chaque pixel de sortie, dans lequel l'étendue spatiale du passage au flou d'un pixel d'arrière-plan adjacent à un pixel d'avant-plan est modifiée en accord avec l'étendue spatiale du passage au flou du pixel d'avant-plan et la distance dans le plan image entre le pixel d'arrière-plan et le pixel d'avant-plan.

2. Procédé selon la revendication 1, dans lequel on emploie un filtre de défocalisation ayant une ouverture circulaire.

3. Procédé selon la revendication 1 ou 2, dans lequel l'étendue spatiale du passage au flou est modifiée par l'intermédiaire du contrôle de la taille de l'ouverture du filtre de défocalisation.

4. Procédé selon l'une quelconque des revendications 1 à 3, dans lequel l'étendue spatiale du passage au flou est modifiée par l'intermédiaire du contrôle de la forme de l'ouverture du filtre de défocalisation.

5. Procédé selon l'une quelconque des revendications précédentes, dans lequel l'étendue spatiale sur laquelle un pixel est floué est définie au moins partiellement par le rayon d'une ouverture de filtre associée au filtre de défocalisation pour ce pixel, comprenant les étapes consistant à : calculer un rayon d'ouverture de filtre pour chacun des pixels d'avant-plan et d'arrière-plan ; et à modifier l'étendue spatiale du passage au flou du pixel d'arrière-plan en accord avec les rayons calculés.

6. Procédé selon la revendication 5, comprenant les étapes consistant à : comparer la différence entre les rayons d'ouverture de filtre calculés et la distance dans le plan image entre les pixels d'arrière-plan et d'avant-plan ; et à modifier l'étendue spatiale du passage au flou du pixel d'arrière-plan en fonction du résultat de la comparaison.

7. Appareil pour simuler des effets de profondeur de champ dans une image artificielle en flouant des pixels sur une étendue spatiale déterminée par une carte de profondeur pour l'image, comprenant un filtre spatial pour agir sur un signal d'image afin de flouer des pixels en accord avec une carte d'ouvertures de filtre qui propose une ouverture de filtre à chaque pixel et un moyen de traitement de carte d'ouvertures de filtre servant à dériver de ladite carte de profondeur une carte d'ouvertures de filtre dans laquelle l'ouverture du filtre au niveau d'un pixel d'arrière-plan adjacent à un pixel d'avant-plan est modifiée en accord avec l'ouverture du filtre au niveau du pixel d'avant-plan et la distance dans le plan image entre le pixel d'arrière-plan et le pixel d'avant-plan.

8. Appareil selon la revendication 7, dans lequel chaque ouverture de filtre est circulaire.

9. Appareil selon la revendication 7 ou la revendication 8, dans lequel les ouvertures de filtre ont leurs tailles modifiées.

10. Appareil selon la revendication 7 ou la revendication 8, dans lequel les ouvertures de filtre ont leurs formes modifiées.

11. Appareil selon l'une quelconque des revendications 7 à 10, dans lequel la carte d'ouvertures de filtre comprend un rayon d'ouverture de filtre pour chaque pixel et dans lequel le moyen de traitement de la carte d'ouvertures de filtre est adapté pour comparer la différence entre les rayons d'ouverture de filtre associés aux pixels d'arrière-plan et d'avant-plan à la distance dans le plan image entre les pixels d'arrière-plan et d'avant-plan en fonction du résultat de la comparaison.
